# EUROPÄISCHE PATENTANMELDUNG

(11) **EP 2 071 502 A1**
(43) Veröffentlichungstag der Anmeldung: **17.06.2009**
(21) Anmeldenummer: 07023845.6
(22) Anmeldetag: 10.12.2007
(51) Int. Cl.: G06Q 10/00

(54) **Elektronisches Gerät für Reinigungskräfte**

(71) Anmelder: VERMOP Salmon GmbH, 82205 Gilching (DE)
(72) Erfinder: Salmon, Dirk, 82205 Gilching (DE)
(74) Vertreter: HOFFMANN EITLE

(57) **Zusammenfassung**

Ein elektronisches Gerät (10) für Reinigungskräfte umfasst ein Gehäuse (12), eine wiederaufladbare Energieversorgungseinheit (18), eine Anzeigevorrichtung im Gehäuse (16), eine datenverarbeitende Einheit mit einer Speichervorrichtung und einer Uhr. Das elektronisches Gerät ist **dadurch gekennzeichnet, dass** das Gehäuse (12) schlagfest und wassergeschützt ist, die Anzeigevorrichtung (16) angepasst ist, um eine Berührung zu detektieren und an die datenverarbeitende Einheit weiterzuleiten, die datenverarbeitende Einheit Daten gemäß in einem Programm gespeicherter Anweisung verarbeitet, wobei das Programm menügesteuert ist und über die Anzeigevorrichtung (16) Piktogramme (32) für einzelne Reinigungstätigkeiten und einen in der Speichervorrichtung hinterlegten Ortsplan (42) anzeigt und einzelne Reinigungstätigkeiten mit der Uhr in Form einer abrufbaren Anzeige einer Stoppuhr koppelt, und die wiederaufladbare Energieversorgungseinheit (18) für einen kabellosen Betrieb von mindestens 8 Stunden ausgelegt ist.

## Beschreibung

### Gebiet der Erfindung

Die Erfindung betrifft ein elektronisches Gerät für Reinigungskräfte mit den Merkmalen des Oberbegriffs des Anspruchs 1 sowie ein interaktives Netzwerk aus derartigen elektronischen Geräten mit den Merkmalen des Anspruchs 8.

### Stand der Technik

In Reinigungsunternehmen sind häufig viele Reinigungskräfte gleichzeitig mit der Reinigung großflächiger Objekte beschäftigt. Um die einzelnen Reinigungskräfte hierbei zeitlich und örtlich zu koordinieren, sowie auch um dem Auftraggeber die durchgeführten Reinigungstätigkeiten belegen zu können, ist ein hoher Verwaltungsaufwand erforderlich. Zudem ist das gezielte Einweisen von Reinigungskräften häufig auch aufgrund unzureichender Sprachkenntnisse der Reinigungskräfte erschwert. Daher muss viel Zeitaufwand in die Schulung von Reinigungskräften sowie die Koordination der einzelnen Abläufe investiert werden.

### Darstellung der Erfindung

Der Erfindung liegt die Aufgabe zugrunde, die Reinigung großflächiger Objekte gründlicher und effektiver durchzuführen.

Die Aufgabe der Erfindung wird durch ein elektronisches Gerät für Reinigungskräfte mit den Merkmalen des Anspruchs 1 sowie durch ein interaktives Netzwerk aus elektronischen Geräten mit den Merkmalen des Anspruchs 8 gelöst.

Erfindungsgemäß wird ein elektronisches Gerät für Reinigungskräfte vorgeschlagen, das ein Gehäuse, eine wiederaufladbare Energieversorgungseinheit, eine Anzeigevorrichtung im Gehäuse sowie eine datenverarbeitende Einheit mit einer Speichervorrichtung und einer Uhr umfasst. Das elektronisches Gerät ist erfindungsgemäß dahingehend ausgestaltet, dass das Gehäuse schlagfest und wassergeschützt ist, damit das Gerät auch bei einem rauhen Umgang und einer nachlässigen Pflege durch die Reinigungskräfte funktionsfähig bleibt. Die Anzeigevorrichtung ist angepasst, um eine Berührung zu detektieren und an die datenverarbeitende Einheit weiterzuleiten. Eine derartige Anzeigevorrichtung bietet Personen, die einerseits Sprachschwierigkeiten besitzen, andererseits aber den Umgang mit elektronisches Geräten, wie PDAs (Personal Digital Assistant) nicht gewöhnt sind, eine möglichst einfache und aus sich selbst heraus verständliche Menüführung. Eine Anzeigevorrichtung, die eine Berührung detektiert macht es zudem möglich, ganz auf Tasten zu verzichten oder aber diese auf eine möglichst geringe Anzahl zu reduzieren.

Weiterhin ist das elektronische Gerät nach der Erfindung so ausgestaltet, dass die datenverarbeitende Einheit Daten gemäß in einem Programm gespeicherter Anweisung verarbeitet, wobei das Programm menügesteuert ist und über die Anzeigevorrichtung Piktogramme für einzelne Reinigungstätigkeiten und einen in der Speichervorrichtung hinterlegten Ortsplan anzeigt und einzelne Reinigungstätigkeiten mit der Uhr in Form einer abrufbaren Anzeige einer Stoppuhr koppelt. Durch die in einem Programm gespeicherten Anweisungen für ein spezifisches elektronisches Gerät lässt sich bei einer Mehrzahl derartiger elektronischer Geräte für jeweils eine Reinigungskraft, nicht nur der Tätigkeitsablauf einzelner Reinigungskräfte, sondern auch für jede Reinigungskraft Hilfestellungen und weiterführende Informationen abrufen. Durch das Vorsehen von Piktogrammen lassen sich derartige Informationen auch für Personen entnehmen, deren Muttersprache nicht der Sprache im Reinigungsunternehmen entspricht und die daher Verständigungsschwierigkeiten haben. Das Vorsehen von Piktogrammen kann dieses Problem lösen, indem einfach zu begreifende Symbole für einzelne Reinigungstätigkeiten, Reinigungsgeräte etc. angezeigt werden. Das Hinterlegen eines Ortsplans macht es zudem möglich, auch bei sehr komplexen zu reinigenden Objekten wie Krankenhäusern oder Flughäfen, jeweils einer Reinigungskraft in Besitz des elektronisches Gerätes die Orientierung zu erleichtern, wobei sich die nach heutiger Praxis falsch, überhaupt nicht oder von verschiedenen Reinigungskräften doppelt durchgeführten Tätigkeiten vermeiden lassen.

Zudem erhält die Reinigungskraft in Form der Kopplung einzelner Reinigungstätigkeiten mit einer Stoppuhr eine exakte Zeitvorgabe für einzelne Reinigungsschritte. Durch diese Maßnahme lässt sich die gesamte Reinigung eines Objekts optimieren, da erfahrungsgemäß manche Reinigungstätigkeiten von den Reinigungskräften zu schnell, andere aber zu intensiv ausgeführt werden. Durch das Vorsehen einer Stoppuhr lassen sich einzelne Reinigungstätigkeiten in optimaler Weise an die Bedürfnisse anpassen.

Schließlich weist das erfindungsgemäße Gerät eine wiederaufladbare Energieversorgungseinheit für einen kabellosen Betrieb von mindestens 8 Stunden auf, so dass eine komplette Schicht ohne ein zwischenzeitlich benötigtes Wiederaufladen der Energieversorgungseinheit durchgeführt werden kann.

Bevorzugte Ausführungsformen folgen aus den übrigen Ansprüchen. Nach einer bevorzugten Ausführungsform weist das elektronisches Gerät zusätzlich Tasten am Gehäuse zur Menüsteuerung auf. Dies kann von Vorteil sein, wenn es in bestimmten Situationen günstiger ist, die Menüsteuerung über Tasten und nicht über die Berührung der Anzeigevorrichtung durchzuführen. Dies kann beispielsweise sinnvoll sein, wenn eine Reinigungskraft spezielle Handschuhe tragen muss und daher die Menüsteuerung über Tasten am Gehäuse ein geringeres Feingefühl erfordern als eine Menüsteuerung über einen Touchscreen, d.h. eine Berührung detektierender Anzeigevorrichtung.

Nach einer bevorzugten Ausführungsform der Erfindung ist das Gerät elektromagnetisch abgeschirmt. Diese Maßnahme ist insbesondere für den Einsatz in Krankenhäusern, aber auch in speziellen weiteren Anwendungen, wie Testlaboratorien etc. erforderlich oder zumindest sinnvoll.

Vorzugsweise weist das elektronisches Gerät weiterhin eine akustische Ausgabevorrichtung auf, vorzugsweise einen Lautsprecher, wobei die akustische Ausgabevorrichtung angepasst ist, um definierte Informationen parallel zur Anzeigevorrichtung über Sprachausgabe auszugeben. Durch eine Sprachausgabe kann einer Reinigungskraft beispielsweise angezeigt werden, dass eine bestimmte Reinigungstätigkeit nun abgeschlossen sein sollte und erneut zu beginnen hat. Alternativ können aber auch weitere, detaillierte Informationen übermittelt werden, wie das zu verwendende Reinigungsmittel, die Notwendigkeit, Reinigungsutensilien wie z.B. Wischbezüge zu wechseln oder aber auch die Abberufung zu Spezialtätigkeiten im Falle einer Vernetzung der einzelnen elektronischen Geräte, wie sie später erläutert werden wird.

Die Sprachausgabe kann auch dahingehend vorteilhaft sein, dass nach einer bevorzugten Ausführungsform die Sprachausgabe auf verschiedene Sprachen voreinstellbar ist. Auf diese Weise können einzelne Personen jeweils in ihrer Muttersprache Informationen abrufen oder aber durch die im Programm gespeicherten Anweisungen an bestimmte Tätigkeiten erinnert werden, wobei Missverständnisse und damit verbunden unzureichende Reinigungstätigkeiten aufgrund von Sprachproblemen vermieden werden können.

Nach einer bevorzugten Ausführungsform der Erfindung umfasst das elektronische Gerät weiterhin eine Leseeinrichtung, die mit der Recheneinheit gekoppelt ist, um Daten spezieller Informationsträger zu lesen und bestimmten Reinigungstätigkeiten zugeordnet abzuspeichern. Mit der Leseeinrichtung kann beispielsweise ein zu verwendendes Reinigungsmittel vor dessen Verwendung eingelesen werden, wodurch sich überprüfen lässt, ob die Reinigungskraft für bestimmte Reinigungsanwendungen auch das richtige Reinigungsmittel verwendet hat. Auch lässt sich auf diese Weise nachweisen, dass für bestimmte Reinigungstätigkeiten bestimmte Reinigungsmittel eingesetzt wurden.

Nach einer bevorzugten Ausführungsform der Erfindung weist das elektronische Gerät weiterhin eine Erfassungseinrichtung zur Bestimmung der Position des elektronischen Geräts und zur Übermittlung der Position an eine ortsfest angeordnete elektronische Vorrichtung auf. So können beispielsweise in einzelnen Bereichen eines Gebäudes, z.B. Türen oder Türschleusen entsprechende Erfassungsvorrichtungen vorgesehen sein, so dass sich von einem zentralen Standpunkt aus die Position der einzelnen elektronischen Geräte in einem Beobachtungsobjekt wie z.B. Gebäude verfolgen lassen. Auf diese Weise kann überprüft werden, ob eine Reinigungskraft den vorgegebenen Reinigungsablauf korrekt durchführt.

Indem ein interaktives Netzwerk aus elektronischen Geräten und einer zentralen Recheneinheit vorgesehen wird, lassen sich Daten zwischen den einzelnen elektronischen Geräten und der zentralen Recheneinheit austauschen, so dass zum einen eine Koordinierung eines komplexen Reinigungsablaufs über die zentrale Recheneinheit möglich ist, zum anderen aber aus der fest eingestellten Routine heraus Sonderinformationen, z.B. Sonderaufträge an die einzelnen Reinigungskräfte übermittelt werden können, so dass diese z.B. in einem Hotel abhängig von den Abreise- und Ankunftszeitpunkten der Gäste mit der Reinigung einzelner Räume beauftragt werden können.

Vorzugsweise erfolgt der Austausch von Daten hierbei kabellos, besonders bevorzugt über WLAN. Ein nicht kabelloser Austausch von Daten ist aber ebenfalls möglich, indem an verschiedenen Stellen im Gebäude Andockstationen vorgesehen werden, über die einzelne elektronische Geräte jeweils einen Update ihres Datensatzes erhalten. Vorzugsweise allerdings findet ein kabelloser Datenaustausch statt, so dass der Austausch von Daten nicht an bestimmte Zeiten und Zeitfolgen gebunden ist, sondern jederzeit erfolgen kann.

### Kurze Beschreibung der Figuren

Nachfolgend wird die Erfindung rein beispielhaft anhand der nachfolgenden Figuren beschrieben, wobei
- Fig. 1: beispielhaft ein erfindungsgemäßes, elektronisches Gerät in Draufsicht zeigt;
- Fig. 2: ein Beispiel für eine mögliche Anzeige bei einem Gerät nach Anspruch 1 zeigt; und
- Fig. 3: eine weitere beispielhafte Anzeige der Anzeigevorrichtung eines Geräts nach Fig. 1 darstellt.

### Wege zur Ausführung der Erfindung

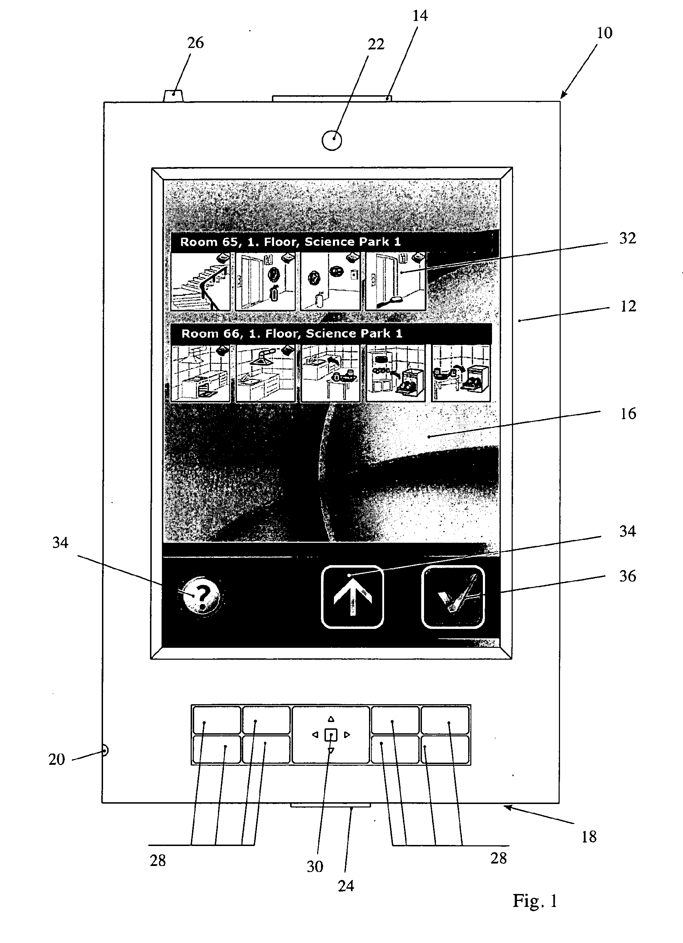

Das in Fig. 1 dargestellte und allgemein mit Referenzziffer 10 bezeichnete elektronische Gerät weist ein Gehäuse 12 auf, das vorzugsweise aus Kunststoff besteht und so gestaltet ist, dass es schlagfest und spritzwassergeschützt ist. Am Gehäuse befindet sich ein Lesekopf 14, eine Anzeigevorrichtung 16 sowie eine auf der Rückseite des dargestellten elektronischen Geräts 10 angeordnete wiederaufladbare Energieversorgungseinheit 18. Im Inneren des Gerätes befindet sich eine datenverarbeitende Einheit. Das elektronische Gerät nach dem dargestellten Ausführungsbeispiel weist weiterhin eine Buchse 20 zum Verbinden mit einer Energieversorgungseinheit, eine akustische Ausgabevorrichtung sowie eine zweite Buchse 24 auf, die dem kabelgebundenen Austausch und Überspielen von Daten dient. Schließlich kann im Gerät auch eine Antennenvorrichtung 26 integriert sein. Die Antennenvorrichtung kann einerseits dazu dienen, die Position des Geräts an eine ortsfest angeordnete elektronische Vorrichtung zu übermitteln, andererseits mit einem kabellosen Netzwerk zu kommunizieren.

Bei dem in Fig. 1 dargestellten Ausführungsbeispiel sind zusätzlich zu der Anzeigevorrichtung einzelne Tasten 28, 30 vorgesehen, wobei die Tasten 28 mit bestimmten Funktionen hinterlegt sind, die Cursortaste 30 hingegen in vier Richtungen bewegt werden kann und der Menüführung durch einen Benutzer dient.

Die Anzeigevorrichtung 16 ist im Ausführungsbeispiel nach Fig. 1 beispielhaft für eine mögliche Menüführung gezeigt. Hier sind Raumbezeichnungen aufgelistet, im konkreten Beispiel Raum 65 und 66, 1. Stock, Science Park 1 und den einzelnen, getrennt voneinander angezeigten Räumen Piktogramme zugeordnet, welche Reinigungstätigkeiten, wie z.B. das Abwischen des Treppengeländers oder aber das Reinigen einer Ablufthaube, oder aber das Entfernen von Geschirr aus einer Geschirrspülmaschine anzeigen. Aus dem Beispiel des Entnehmens von Geschirr aus einer Geschirrspülmaschine wird deutlich, dass im vorliegenden Fall zwar stets ein elektronisches Gerät für Reinigungskräfte und auch das Durchführen von Reinigungstätigkeiten angesprochen wird, dass sich aber mit dem elektronischen Gerät auch andere, verwandte Tätigkeiten im Bereich der heute vernetzten Einzeltätigkeiten für Reinigungskräfte im sogenannten Facility Management steuern lassen.

Die einzelnen Piktogramme lassen sich bei einer geeigneten Menüführung zudem antippen, da die Anzeigevorrichtung 16 Berührung detektiert. Beim Antippen der einzelnen Piktogrammanzeigen 32 öffnet sich ein darunter liegendes Menü, das der Reinigungskraft weitere Informationen zu den zu verwendenden Reinigungsutensilien sowie eine groß auf der Anzeigevorrichtung angezeigte Stoppuhr anzeigt, welche die Dauer der einzelnen Reinigungsschritte erkennbar macht. Der jeweilige Ablauf der vorgegebenen Zeitdauer für einen einzelnen Reinigungsschritt kann somit durch eine rückwärts laufende Stoppuhr und ergänzend auch durch die Ausgabe eines Signals durch die akustische Ausgabevorrichtung 22 angezeigt werden.

Die ebenfalls auf der Anzeigevorrichtung 12 dargestellten Pfeilsymbole 34 dienen dazu, dass die Reinigungskräfte zwischen den einzelnen Menüebenen hin- und herblättern können, während die Anzeige 36 erkennbar ein "ok" anzeigt und von der Reinigungskraft gedrückt werden muss, wenn einzelne Reinigungsschritte korrekt durchgeführt wurden.

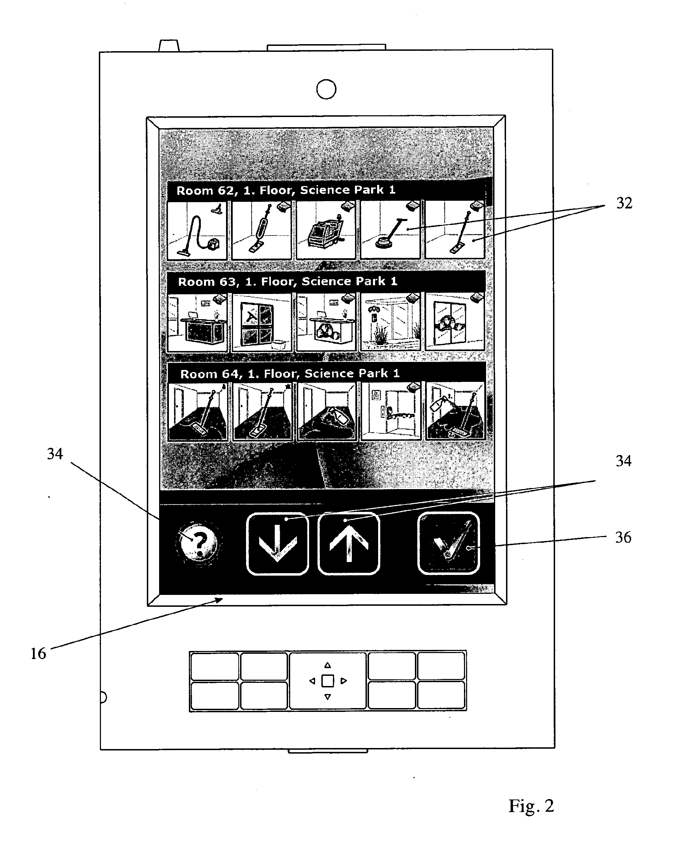

Die Darstellung der Anzeige in Fig. 2 gibt weitere Beispiele für fiktive Räume und die dort auszuführenden Reinigungstätigkeiten in Form einfacher Piktogramme 32, wobei die ausgewählten Piktogramme nur beispielhaft zu verstehen sind und so gewählt werden müssen, dass für die einzelne Reinigungskraft deutlich wird, welche Arbeitsschritte auszuführen sind, oder aber welche nicht ausgeführt werden dürfen. Hierzu kann mittels geeigneter Symbole, die durchgestrichen sind, einer Reinigungskraft deutlich gemacht werden, dass bestimmte Reinigungsschritte nicht vorgenommen werden dürfen. So kann beispielsweise vermieden werden, dass empfindliche elektronische Geräte nass abgewischt werden oder aber zur Bodenpflege empfindlicher Bodenbeläge ein ungeeignetes Reinigungsmittel verwendet wird.

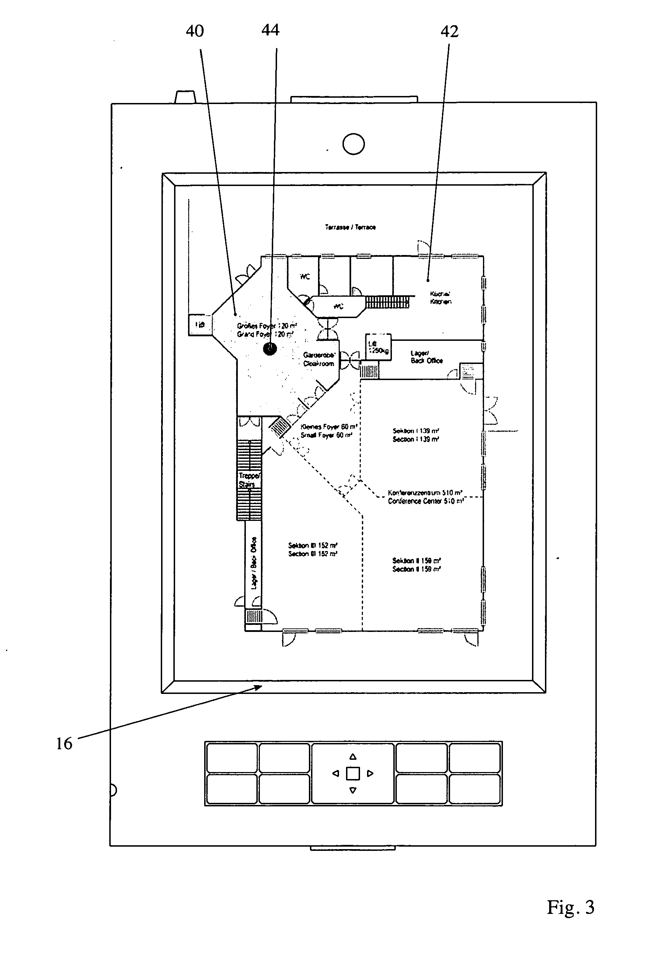

Fig. 3 zeigt eine mögliche weitere Menüebene, die z.B. erhalten werden kann, indem auf die Anzeige der Raumbezeichnung getippt wird, wodurch die diese Berührung detektierende Anzeigevorrichtung in die in Fig. 3 dargestellte Menüebene springt. Dabei wird ein Gebäudeplan angezeigt und der Reinigungskraft der entsprechende Raum 40 auf dem Gebäudeplan 42 farblich abgesetzt gezeigt. Der ebenfalls in Fig. 3 dargestellt Punkt 44 könnte dann, wenn das elektronische Gerät eine Erfassungseinrichtung zur Bestimmung der Position des elektronischen Gerätes besitzt, die momentane Position der Reinigungskraft anzeigen, damit diese gleichsam wie in einem Navigationsgerät in Richtung auf den nächsten, anzusteuernden Raum oder einen Raum für spezielle Sonderaufgaben geleitet werden kann.

Im Falle eines interaktiven Netzwerks könnte auf einer zentralen Recheneinheit, die in den Figuren nicht dargestellt ist, auf nebeneinander angeordneten Plänen einzelner Etagen eines Gebäudes in gleicher Weise die Position einzelner elektronischer Geräte angezeigt werden und zudem überprüft werden, ob die im Programm gespeicherten Anweisungen und Arbeitsabläufe in korrekter Weise befolgt werden.

In den Ausführungsbeispielen nach Fig. 1 bis 3 wurde jeweils die Anzeige in deutscher Sprache dargestellt, doch besteht vorzugsweise die Möglichkeit, die Anzeige auf verschiedene Sprachen umzustellen und auch die in der Daten verarbeitenden Einheit hinterlegten akustischen Anweisungen in verschiedenen Sprachen abzulegen und auf diese Weise auch in verschiedenen Sprachen abrufbar zu machen.

## Patentansprüche

1. Elektronisches Gerät (10) für Reinigungskräfte, umfassend:
- ein Gehäuse (12);
- eine wiederaufladbare Energieversorgungseinheit (18) ;
- eine Anzeigevorrichtung im Gehäuse (16);
- eine datenverarbeitende Einheit mit einer Speichervorrichtung und einer Uhr;
**dadurch gekennzeichnet, dass**
- das Gehäuse (12) schlagfest und wassergeschützt ist;
- die Anzeigevorrichtung (16) angepasst ist, um eine Berührung zu detektieren und an die datenverarbeitende Einheit weiterzuleiten;
- die datenverarbeitende Einheit Daten gemäß in einem Programm gespeicherter Anweisung verarbeitet, wobei das Programm menügesteuert ist und über die Anzeigevorrichtung (16) Piktogramme (32) für einzelne Reinigungstätigkeiten und einen in der Speichervorrichtung hinterlegten Ortsplan (42) anzeigt und einzelne Reinigungstätigkeiten mit der Uhr in Form einer abrufbaren Anzeige einer Stoppuhr koppelt, und
- die wiederaufladbare Energieversorgungseinheit (18) für einen kabellosen Betrieb von mindestens 8 Stunden ausgelegt ist.

2. Elektronisches Gerät nach Anspruch 1, weiter umfassend Tasten (28, 30) am Gehäuse (12) zur Menüsteuerung.

3. Elektronisches Gerät nach Anspruch 1 oder 2,
**dadurch gekennzeichnet, dass** das Gerät elektromagnetisch abgeschirmt ist.

4. Elektronisches Gerät nach einem der vorhergehenden Ansprüchen, weiter umfassend eine akustische Ausgabevorrichtung (22), vorzugsweise einen Lautsprecher, welche angepasst ist, um definierte Informationen parallel zur Anzeige an der Anzeigevorrichtung (16) über Sprachausgabe auszugeben.

5. Elektronisches Gerät nach Anspruch 4,
**dadurch gekennzeichnet, dass** die Sprachausgabe auf verschiedene Sprachen voreinstellbar ist.

6. Elektronisches Gerät nach einem der vorhergehenden Ansprüchen, weiter umfassend eine Leseeinrichtung (14), die mit der Recheneinheit gekoppelt ist, um Daten spezieller Informationsträger zu lesen und bestimmten Reinigungstätigkeiten zugeordnet abzuspeichern.

7. Elektronisches Gerät nach einem der vorhergehenden Ansprüchen, weiter umfassend eine Erfassungseinrichtung (26) zur Bestimmung der Position des Elektronischen Geräts (10) und zur Übermittlung der Position an eine ortsfest angeordnete elektronische Vorrichtung.

8. Interaktives Netzwerk aus Elektronischen Geräten (10) nach einem der vorhergehenden Ansprüchen und mit einer zentralen Recheneinheit, die mit den einzelnen Elektronischen Geräten Daten austauschen kann.

9. Interaktives Netzwerk nach Anspruch 8,
**dadurch gekennzeichnet, dass** der Austausch von Daten kabellos erfolgt, vorzugsweise über WLAN.
